# FASCICULE DE BREVET EUROPEEN

(11) **EP 3 508 419 B1**
(45) Date de publication et mention de la délivrance du brevet: **03.06.2020**
(21) Numéro de dépôt: 18207581.2
(22) Date de dépôt: 21.11.2018
(51) Int. Cl.: B64C 13/10, B64C 19/00, B64D 43/00, G08B 3/00, G08B 5/36, G06F 3/01

(54) **PROCEDE ET SYSTEME POUR AIDER UN PILOTE D'UN AERONEF A GERER DES LISTES DE COMMANDES**
VERFAHREN UND SYSTEM ZUR UNTERSTÜTZUNG EINES FLUGZEUGPILOTEN BEI DER VERWALTUNG VON STEUERUNFGSLISTEN
METHOD AND SYSTEM FOR ASSISTING AN AIRCRAFT PILOT WITH MANAGING LISTS OF COMMANDS

(30) Priorité: 04.01.2018 FR 1850037
(43) Date de publication de la demande: 10.07.2019
(73) Titulaire: Airbus Operations S.A.S., 31060 Toulouse (FR)
(72) Inventeur: PAPAÏX, Benoit, 31300 TOULOUSE (FR); CHATRENET, Nicolas, 31820 PIBRAC (FR); SOUFFRANT, Vincent, 31000 TOULOUSE (FR); DELERIS, Yannick, 31200 TOULOUSE (FR); DELPECH, Estelle, 31830 PLAISANCE-DU-TOUCH (FR); DUCHEVET, Alexandre, 47480 PONT DU CASSE (FR); LE PROVOST, Freddy, 31400 TOULOUSE (FR)
(74) Mandataire: Gicquel, Olivier Yves Gérard

(56) Documents cités:
- US-A- 3 059 062
- US-A1- 2014 320 321
- US-A1- 2015 298 816
- US-A1- 2016 152 330

## Description

La présente invention concerne un procédé et un système pour aider un pilote d'un aéronef à gérer des listes de commandes.

Pour commander des systèmes complexes d'un aéronef, en particulier d'un avion de transport, l'équipage de l'aéronef utilise souvent des listes de commandes (« check-list » en anglais) prédéterminées. De telles listes de commandes comprennent une suite de commandes (ou procédures) comprenant des actions que doit réaliser le pilote, notamment en agissant sur des éléments d'actionnement. Dans le cadre de la présente invention, on entend, par « élément d'actionnement », tout organe, bouton, levier ou moyen de commande ou tout élément tactile présent sur l'aéronef et susceptible d'être actionné (touché, pressé, tiré,...) par un pilote de l'aéronef pour commander la mise en œuvre d'une action particulière.

Sur des avions de transport commerciaux pilotés par au moins deux pilotes, pour la mise en œuvre d'une telle liste de commandes, généralement, l'un des pilotes, à savoir le pilote PM (pour « Pilot Monitoring » en anglais) qui surveille le vol, lit au fur et à mesure les différentes commandes (ou étapes de procédure) de la liste de commandes, et l'autre pilote, à savoir le pilote PF (pour « Pilot Flying » en anglais) qui pilote l'aéronef, réalise les actions demandées pour chacune de ces commandes ou étapes de procédure. Le pilote PM qui lie les actions surveille simultanément les actions réalisées par le pilote PF, et permet ainsi d'empêcher des erreurs d'actionnements tels qu'un actionnement sur un mauvais système, non concerné par la procédure en cours, ou une commande ou un positionnement erroné d'un bon élément d'actionnement. Le document US2015/0298816 divulgue une méthode pour gérer une telle liste de commandes. Le document US2014/0320321 divulgue une méthode d'interaction entre un pilote et l'environnement dans une poste de pilotage d'un avion.

Malgré ce contrôle par le pilote PM, des erreurs d'actionnement ne sont pas exclues. Cette solution usuelle concernant la gestion d'une liste de commandes n'est donc pas complètement satisfaisante.

La présente invention a pour objet de remédier à cet inconvénient. Pour ce faire, elle concerne un procédé d'aide à la gestion d'au moins une liste de commandes, gérée par au moins un pilote d'un aéronef, tel que revendiqué dans la revendication 1.

Ainsi, grâce à l'invention, non seulement on guide le pilote dans l'actionnement qu'il doit réaliser en mettant en évidence l'élément d'actionnement à actionner pour mettre en œuvre la commande courante de la liste de commande, mais de plus, on est en mesure de détecter une intention de réaliser un actionnement erroné et on alerte, le cas échéant, le pilote pour qu'il s'abstienne de réaliser un tel actionnement erroné. L'aide apportée par ledit procédé permet ainsi de faciliter la gestion d'une liste de commandes et surtout de fortement réduire d'éventuelles erreurs d'actionnement lors de la gestion de la liste de commandes.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels :
- la figure 1 est le schéma synoptique d'un mode de réalisation particulier d'un dispositif d'aide à la gestion d'une liste de commandes ;
- la figure 2 illustre schématiquement un exemple d'éléments d'actionnement et des capteurs associés ;
- les figures 3A, 3B et 3C montrent un premier exemple de signalisation pour des manettes des gaz d'un aéronef ;
- les figures 4A, 4B et 4C montrent un deuxième exemple de signalisation pour des manettes des gaz d'un aéronef ;
- le figure 5 montre un troisième exemple de signalisation pour des manettes des gaz d'un aéronef ;
- les figures 6 et 7 montrent deux types d'éléments de signalisation différents, associés à des boutons ; et
- la figure 8 est le schéma synoptique d'un procédé d'aide à la gestion de listes de commandes.

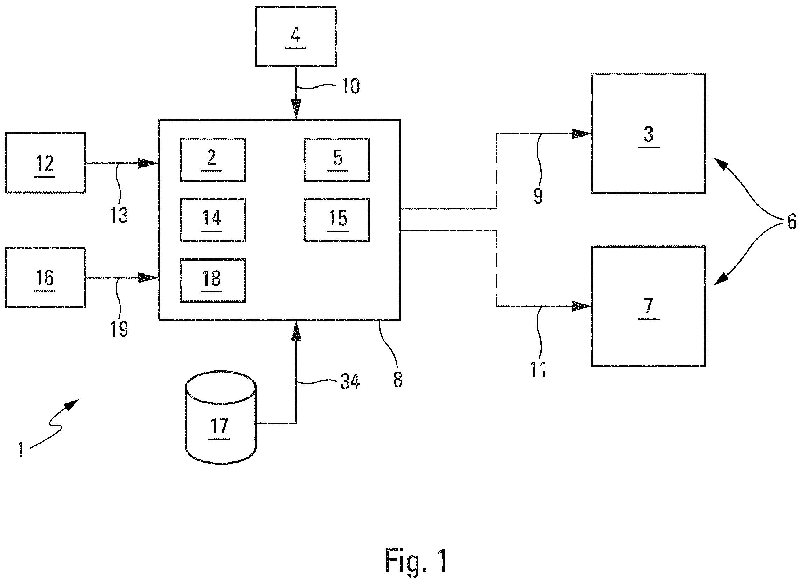

Le système 1 représenté schématiquement dans un mode de réalisation particulier sur la figure 1 et permettant d'illustrer l'invention, est destiné à aider un ou plusieurs pilotes d'un aéronef à gérer des listes de commandes sur l'aéronef (non représenté), en particulier un avion de transport, sur lequel est embarqué ledit système 1.

Les listes de commandes comprennent une suite (ou succession) de commandes (ou procédures) comprenant notamment des actions (ou commandes) que doit réaliser le pilote, en particulier en agissant sur des éléments d'actionnement. Un élément d'actionnement peut être tout organe, bouton (rotatif, de pression,...), levier ou moyen de commande ou tout élément tactile (écran tactile, commande tactile,...) présent dans le poste de pilotage de l'aéronef et susceptible d'être actionné (touché, enfoncé, tiré,...) par un pilote de l'aéronef, pour commander la mise en œuvre d'une action (ou commande) particulière.

Dans le cadre de la présente invention, une liste de commandes prise en compte par le système 1 peut être toute liste de commandes usuelle utilisée lors d'un fonctionnement (ou d'une opération) nominal ou lors d'une alerte. Il peut s'agir, par exemple, de listes de commandes prévues en cas d'alerte émise par un système de surveillance de type ECAM (« Electronic Centralized Aircraft Monitoring » en anglais).

Le système 1 comporte, comme représenté sur la figure 1 :
- une unité d'identification 2 configurée pour identifier au moins un élément d'actionnement à actionner, afin de mettre en œuvre une commande courante d'une liste de commandes actuellement gérée. On entend par commande courante, la commande qui doit être réalisée à l'instant courant parmi la pluralité de commandes successives de la liste de commandes qui est gérée (ou mise en œuvre) ;
- une unité de signalisation 3 configurée pour mettre en évidence, visuellement, l'élément d'actionnement identifié par l'unité d'identification 2 ;
- une unité de détection 4 configurée pour réaliser une surveillance à proximité d'éléments d'actionnement et pour pouvoir, notamment, détecter une main d'un pilote qui s'approche d'un élément d'actionnement ou le touche ;
- une unité de vérification 5 configurée pour vérifier, le cas échéant, si la position de la main du pilote (détectée par l'unité de détection 4) est cohérente avec la position de l'élément d'actionnement identifié et mis en évidence par l'unité de signalisation 3, en vue de son actionnement, c'est-à-dire pour s'assurer que la main s'approche du (ou touche le) bon élément d'actionnement (cohérence dans ce cas), et non pas un élément d'actionnement ne devant pas être actionné (absence de cohérence dans ce cas) ; et
- au moins une unité d'alerte 6 configurée pour alerter le pilote d'un risque d'actionnement erroné, en cas d'absence de cohérence entre la position détectée de la main du pilote et la position de l'élément d'actionnement.

Dans un mode de réalisation préféré, l'unité d'alerte 6 comporte l'unité de signalisation 3 permettant de mettre en œuvre une mise en évidence (ou une alerte) visuelle, et une unité de génération sonore 7 permettant de mettre en œuvre une alerte sonore.

Le système 1 permet ainsi de guider le pilote dans l'actionnement qu'il doit réaliser en mettant en évidence (par l'intermédiaire de l'unité de signalisation 3) l'élément d'actionnement à actionner, pour mettre en œuvre la commande courante de la liste de commandes.

De plus, le système 1 permet de détecter (par l'intermédiaire de l'unité de détection 4 et de l'unité de vérification 5) une intention de réaliser un actionnement erroné et d'alerter le cas échéant (par l'intermédiaire de l'unité d'alerte 6), le pilote pour qu'il s'abstienne de réaliser un tel actionnement erroné. L'aide ainsi apportée par le système 1 permet de faciliter la gestion d'une liste de commandes et surtout de fortement réduire d'éventuelles erreurs d'actionnement lors de la gestion de la liste de commandes.

L'unité de signalisation 3 est configurée pour fournir des informations, notamment des alertes ou des guidages de type visuel, par une signalisation visuelle particulière, généralement à proximité, sur ou autour d'un élément d'actionnement. En outre, l'unité de génération sonore 7 est configurée pour fournir des informations, notamment des alertes ou des guidages, de manière sonore, par exemple via au moins un haut-parleur installé dans le poste de pilotage. L'unité de génération sonore 7 peut émettre des messages vocaux et/ou de simples signaux sonores (sons ou suites de sons).

Par ailleurs, le système 1 comprend une unité de confirmation pour confirmer une intention d'actionnement dite conforme (ou cohérente), lorsque l'unité de vérification 5 conclut à une cohérence entre la position détectée de la main du pilote et la position de l'élément d'actionnement. Cette unité de confirmation utilise, de préférence, l'unité de génération sonore 7 qui émet un message sonore indiquant une intention d'actionnement conforme. L'unité de confirmation peut également utiliser l'unité de signalisation 3 qui peut émettre un signal approprié, par exemple sur un écran d'affichage du poste de pilotage. Cette confirmation qui permet de prévenir le pilote qu'il est en train de réaliser l'actionnement demandé, lui apporte une aide supplémentaire en le confortant dans son action.

Dans un mode de réalisation particulier, l'unité d'identification 2 et l'unité de vérification 5 font partie d'une unité centrale 8 qui est reliée par l'intermédiaire de liaisons 9, 10 et 11, respectivement à l'unité de signalisation 3, à l'unité de détection 4 et à l'unité de génération sonore 7.

Par ailleurs, le système 1 comprend une unité de détection 12 configurée pour détecter un actionnement réalisé et terminé d'un élément d'actionnement. L'unité de détection 12 peut faire partie de systèmes à commander de l'aéronef. Cette unité de détection 12 informe, par exemple, l'unité centrale 8 de l'actionnement et de l'identification de cet élément d'actionnement, par l'intermédiaire d'une liaison 13. Le système 1 comporte une unité de vérification 14 pour vérifier si cet élément d'actionnement actionné correspond bien à l'élément d'actionnement qui devait être actionné. Cette unité de vérification 14 peut faire partie de l'unité centrale 8.

De plus, le système 1 comprend une unité de confirmation pour confirmer un actionnement correct d'un élément d'actionnement (identifié et mis en évidence), lorsque cet actionnement correct a été constaté par l'unité de vérification 14 à partir d'une information reçue de l'unité de détection 12.

L'unité de confirmation utilise, de préférence, l'unité de génération sonore 7 qui émet un message sonore indiquant un actionnement correct. L'unité de confirmation peut également utiliser l'unité de signalisation 3 qui peut émettre un signal approprié, par exemple sur un écran d'affichage du poste de pilotage. Cette confirmation qui permet d'informer le pilote qu'il a bien réalisé l'actionnement tel que demandé, lui apporte une aide supplémentaire dans la gestion de la liste de commandes en lui indiquant qu'il peut passer à la commande suivante.

L'unité d'alerte 6 est également configurée pour informer, de façon sonore et/ou de façon visuelle, le pilote en cas d'un actionnement erroné, détecté par l'unité de vérification 14 à partir d'une information reçue de l'unité de détection 12.

En outre, le système 1 comporte une unité de récupération 15 configurée pour déterminer, dans le cas d'un actionnement erroné d'un élément d'actionnement, ayant générée une commande réversible, une procédure de récupération permettant de remédier à la situation générée par cet actionnement erroné et pour identifier au moins un élément d'actionnement à actionner pour réaliser cette procédure de récupération. La procédure de récupération est mise en œuvre uniquement pour une commande réversible et non pas pour une commande irréversible (où il n'est plus possible de remédier à la situation générée par l'actionnement erroné).

Cette unité de récupération 15 peut faire partie de l'unité centrale 8. L'élément d'actionnement identifié (devant être actionné pour remédier à la situation) est mis en évidence visuellement par l'unité de signalisation 3, et il peut également être signalé par l'unité de génération sonore 7.

Ainsi, le système 1 permet de détecter un actionnement erroné et de le signaler au pilote. Il est également en mesure de prévoir, si cela est possible, une procédure de récupération et de guider le pilote pour mettre en œuvre cette procédure de récupération. Ceci apporte une aide précieuse au pilote dans une telle situation d'actionnement erroné.

Par ailleurs, le système 1 comporte :
- une unité de surveillance 16 configurée pour réaliser une surveillance de systèmes de l'aéronef et pour pouvoir détecter, lors de cette surveillance, le cas échéant, une condition particulière informant qu'une liste de commandes est mise en œuvre ou doit être mise en œuvre. Cette condition particulière peut être, notamment, l'actionnement d'un élément d'actionnement, la détection d'une condition particulière ou d'une situation particulière d'un système de l'aéronef,... ;
- une base de données 17 stockant une ou plusieurs listes de commandes prédéterminées, qui sont prises en compte par le système 1 (pour fournir une aide à leur gestion) ; et
- une unité de vérification 18, intégrée par exemple dans l'unité centrale 8 et reliée par l'intermédiaire de liaisons 19 et 34 respectivement à l'unité de surveillance 16 et à la base de données 17. Cette unité de vérification 18 est configurée pour vérifier, en cas de détection (par l'unité de surveillance 16) d'une condition particulière relative à la mise en œuvre d'une liste de commandes particulière, si cette liste de commandes particulière correspond à l'une desdites listes de commandes stockées dans la base de données 17.

Dans un mode de réalisation préféré, l'unité d'identification 2 est employée pour identifier un élément d'actionnement à actionner, afin de mettre en œuvre une commande courante d'une liste de commandes particulière, uniquement si l'unité de vérification 18 a confirmé que cette liste de commandes particulière correspond à l'une desdites listes de commandes stockées dans la base de données 17.

Par ailleurs, l'unité de détection 4 comporte une pluralité de capteurs 21 agencés à proximité, autour ou sur les éléments d'actionnement 20 considérés, qui sont par exemple installés sur le tableau de bord et/ou le pylône central du poste de pilotage de l'aéronef. Ces capteurs 21, par exemple de type infrarouge, sont susceptibles de détecter un mouvement, et notamment l'approche d'un objet ou d'une partie d'un corps humain, telle qu'une main d'un pilote. Tout type de capteur susceptible de réaliser une telle détection peut être utilisé.

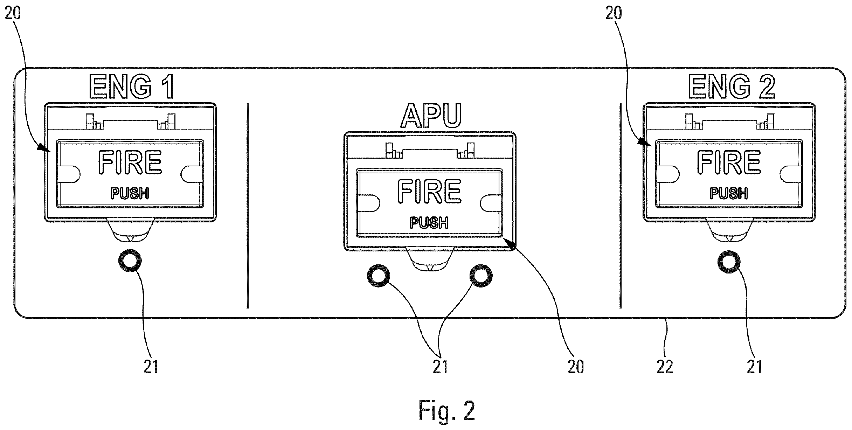

Sur la figure 2, on a représenté un exemple de localisation de capteurs 21, sur une zone de commande 22 (par exemple du tableau de bord de l'aéronef). Cette zone de commande 22 comprend trois éléments d'actionnement 20, en l'occurrence des interrupteurs à pousser (« PUSH » en anglais) en cas de feu (« FIRE » en anglais) sur l'un des deux moteurs (« ENG1 » et « ENG 2 ») ou sur un groupe auxiliaire de puissance (« APU » pour Auxiliary Power Unit en anglais). Les capteurs 21 sont agencés au-dessous des éléments d'actionnement 21 dans cet exemple.

Tout positionnement d'un capteur qui lui permet de détecter une approche d'un élément d'actionnement à surveiller ou le contact de cet élément d'actionnement peut être envisagé.

Par ailleurs, l'unité de signalisation 3 comporte des éléments de signalisation configurés pour mettre en évidence visuellement des éléments d'actionnement, par l'intermédiaire notamment de visualisations ou d'illuminations de types (illumination constante, clignotement,...), de tailles, de formes (tout type de formes géométriques possibles, avec une illumination ponctuelle ou sur une surface) et/ou de couleurs (avec notamment un code de couleurs particulier, par exemple une couleur verte pour un élément d'actionnement à actionner et une couleur rouge pour un élément d'actionnement ne devant pas être actionné) différentes. Tout élément de signalisation permettant une telle mise en évidence visuelle peut être envisagé.

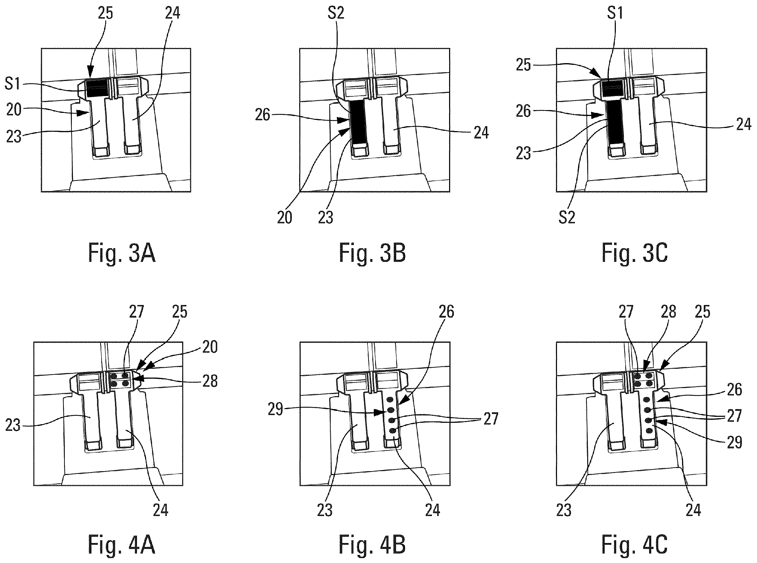

Sur les figures 3A à 5, on a représenté différents exemples d'éléments de signalisation, faisant partie de l'unité de signalisation 3 et susceptibles d'être activés afin de signaler, comme élément d'actionnement 20, l'une des deux manettes des gaz 23 et 24 (respectivement gauche et droite) de l'aéronef. Ces manettes des gaz 23 et 24 qui sont agencées sur le pylône central du poste de pilotage de l'aéronef, entre les sièges des deux pilotes, permettent de commander les puissances des moteurs de l'aéronef.

Dans l'exemple des figures 3A à 3C, la signalisation de la manette des gaz 23 (de gauche) est mise en œuvre à l'aide d'éléments de signalisation correspondant à une ou plusieurs surfaces illuminées S1 et S2 représentées en noir sur les figures 3A à 3C, mais présentant une ou des couleurs particulières sur l'aéronef, par exemple en vert. Ces surfaces S1 et S2 sont formées, par exemple, de diodes électroluminescentes organiques de type OLED (« Organic Light-Emitting Diode » en anglais).

Dans cet exemple :
- la surface illuminée S1 peut être prévue sur la poignée 25 de la manette des gaz 23, comme représenté sur la figure 3A ;
- la surface illuminée S2 peut être prévue sur le manche 26 de la manette des gaz 23, comme représenté sur la figure 3B ; ou
- les deux surfaces illuminées S1 et S2 peuvent être prévues simultanément sur la manette des gaz 23 , comme représenté sur la figure 3C.

Dans l'exemple des figures 4A à 4C, les éléments de signalisation de la manette des gaz 24 (de droite) comprennent un ensemble de points (ou ronds) d'illumination 27. Chacun de ces points d'illumination 27 est formé, par exemple, d'une diode électroluminescente de type LED (« Light-Emitting Diode » en anglais).

Dans cet exemple :
- un ensemble 28 de points d'illumination 27 placés à des sommets d'un carré, peut être prévu sur la poignée 25 de la manette des gaz 24, comme représenté sur la figure 4A ; ou
- un ensemble 29 de points d'illuminations 2, formant une ligne, peut être prévu le long du manche 26 de la manette des gaz 24, comme représenté sur la figure 4B ; ou
- les deux ensembles 28 et 29 peuvent être prévus simultanément sur la manette des gaz 24, comme représenté sur la figure 4C.

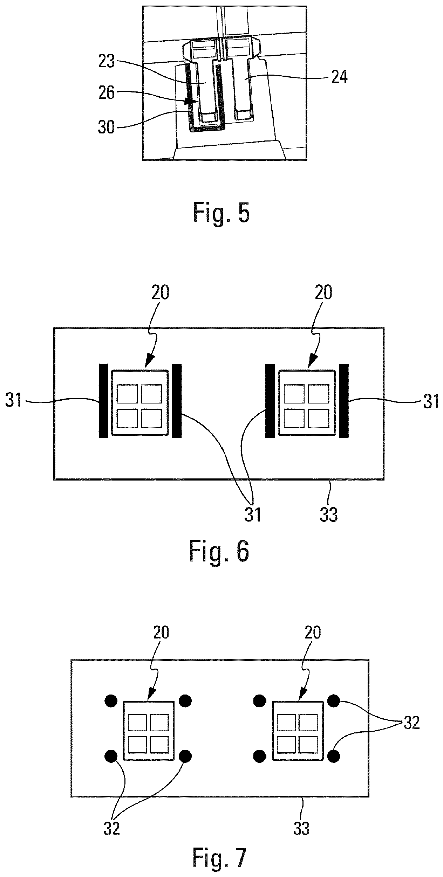

En outre, dans l'exemple de la figure 5, l'élément de signalisation de la manette des gaz 23 (de gauche) comprend une illumination 30 du fond, en l'occurrence sous forme d'un contour de type rectangulaire, qui entoure la base du manche 26 de ladite manette des gaz 23 sur trois côtés.

Sur les figures 6 et 7, on a représenté différents autres exemples d'éléments de signalisation 31 et 32, faisant partie de l'unité de signalisation 3 et susceptibles d'être activés afin de signaler des éléments d'actionnement 20 d'une zone de commande 33 (par exemple du tableau de bord de l'aéronef).

Dans cet exemple :
- les éléments de signalisation peuvent être des lignes illuminées 31, prévues par exemple de part et d'autre de l'élément d'actionnement 20, comme représenté sur la figure 6 ; ou
- les éléments de signalisation peuvent comporter un ensemble de points (ou ronds) d'illumination 32, notamment sous forme de diodes électroluminescentes, placés par exemple à des sommets d'un carré autour de l'élément d'actionnement 20, comme représenté sur la figure 7.

Le système 1, tel que décrit ci-dessus, est susceptible de mettre en œuvre un procédé d'aide à la gestion de listes de commandes, sur l'aéronef sur lequel il est installé 1.

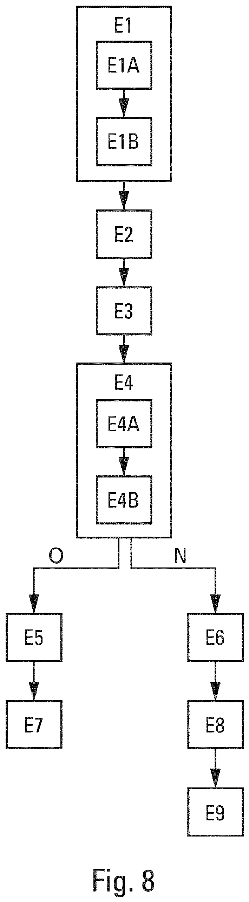

Ce procédé d'aide à la gestion comprend, comme représenté sur la figure 8 :
- une étape préliminaire E1 comprenant :
   - une étape de surveillance E1A, mise en œuvre par l'unité de surveillance 16, consistant à détecter, lors de la surveillance, le cas échéant, une condition particulière relative à la mise en œuvre d'une liste de commandes ;
   - une étape de vérification E1B, mise en œuvre par l'unité de vérification 18, consistant à vérifier, en cas de détection (à l'étape de surveillance E1A) d'une condition particulière relative à la mise en œuvre d'une liste de commandes, si la liste de commandes correspondant à au moins une liste de commandes prédéterminée ;
- une étape d'identification E2, mise en œuvre par l'unité d'identification 2, consistant à identifier au moins un élément d'actionnement à actionner pour mettre en œuvre une commande courante d'une liste de commandes. L'étape d'identification E2 est mise en œuvre uniquement lorsque l'étape de vérification E1B conclut que la liste de commandes correspond à une liste de commandes prédéterminée (surveillée) ;
- une étape de signalisation E3, mise en œuvre par l'unité de signalisation 3, consistant à mettre en évidence visuellement l'élément d'actionnement identifié ;
- une étape de surveillance E4 comprenant :
   - une étape de détection EA4, mise en œuvre par l'unité de détection 4, permettant de détecter une position d'une main d'un pilote ; et
   - une étape de vérification E4B, mise en œuvre par l'unité de vérification 5, consistant à vérifier si la position détectée de la main du pilote est cohérente avec la position de l'élément d'actionnement identifié et mis en évidence à l'étape de signalisation E3, en vue de son actionnement.

En fonction de cette surveillance, le procédé comprend une étape E5 ou une étape E6, selon que l'étape de surveillance E4 conclut à la cohérence (« O ») ou à l'absence de cohérence (« N ») entre la position détectée de la main du pilote et la position de l'élément d'actionnement identifié.

L'étape E5 est une étape de confirmation pour confirmer une intention d'actionnement conforme, lorsque l'étape de vérification E4B de l'étape de surveillance E4 conclut à une cohérence entre la position détectée de la main du pilote et la position de l'élément d'actionnement.

De plus, le procédé comprend une étape de confirmation E7 pour confirmer, le cas échéant, un actionnement correct d'un élément d'actionnement identifié et mis en évidence.

En outre, l'étape E6 est une étape d'alerte, mise en œuvre par l'unité d'alerte 6, consistant à alerter le pilote d'un risque d'actionnement erroné, lorsque l'étape de vérification E4B de l'étape de surveillance E4 conclut à une absence de cohérence entre la position détectée de la main du pilote et la position de l'élément d'actionnement.

Le procédé comprend en outre une étape d'alerte ou de confirmation E8, mise en œuvre par l'unité de génération sonore 7 notamment, consistant à informer le pilote d'un actionnement correct ou d'un actionnement erroné, selon le cas.

Le procédé comprend également une étape de récupération E9, mise en œuvre par l'unité de récupération 15, consistant à déterminer, en cas d'actionnement erroné, au moins un élément d'actionnement permettant de remédier à la situation générée par l'actionnement erroné et à mettre en évidence cet élément d'actionnement.

A titre d'illustration, on présente, ci-après, un exemple de mise en œuvre d'une commande courante d'une liste de commandes.

On suppose que l'on se trouve dans une situation où la commande courante exige que les pilotes doivent actionner la manette des gaz 23 (de gauche) pour amener le moteur de gauche de l'aéronef au ralenti.

Après l'identification de cette manette des gaz 23, l'unité de signalisation 3 signale cette manette des gaz 23, par exemple à l'aide d'une des signalisations représentées sur les figures 3A à 3C.

Si le pilote approche sa main de la manette des gaz 24 de droite, cette approche est détectée par des capteurs de l'unité de détection 4. L'unité de vérification 5 en déduit que cette manette des gaz 24 est la mauvaise manette des gaz, et l'unité d'alerte 6 alerte le pilote. Cette alerte peut consister à émettre un message vocal dans le poste de pilotage, via l'unité de génération sonore 7.

En variante ou en complément, cette alerte peut également consister à mettre en évidence visuellement la manette des gaz 24, pour avertir le pilote qu'elle ne doit pas être actionnée, à l'aide de l'unité de signalisation 3. Ceci peut être réalisé à l'aide d'une des signalisations représentées sur les figures 4A à 4C, en utilisant notamment une couleur particulière, par exemple en rouge, et/ou une visualisation particulière, par exemple un clignotement.

Ainsi alerté de ce mauvais actionnement potentiel, le pilote retire sa main de la manette des gaz 24 et actionne la manette des gaz 23 comme requis.

Cet actionnement correct est confirmé par un message approprié émis par l'unité de génération sonore 7.

## Revendications

1. Procédé d'aide à la gestion d'au moins une liste de commandes, gérée par au moins un pilote d'un aéronef, comprenant
- une étape d'identification (E2), mise en œuvre par une unité d'identification (2), consistant à identifier au moins un élément d'actionnement (20) à actionner pour mettre en œuvre une commande courante d'une liste de commandes ;
**caractérisé en ce que** le procédé comprend en outre
- une étape de signalisation (E3), mise en œuvre par une unité de signalisation (3), consistant à mettre en évidence visuellement l'élément d'actionnement (20) identifié par une signalisation visuelle à proximité, sur ou autour dudit élément d'actionnement;
- une étape de détection (E4A), mise en œuvre par une unité de détection (4), consistant à détecter une position au moins d'une main d'un pilote ;
- une étape de vérification (E4B), mise en œuvre par une unité de vérification (5), consistant à vérifier si la position détectée de la main du pilote est cohérente avec la position de l'élément d'actionnement (20) identifié et mis en évidence, en vue de son actionnement ; et
- une première étape d'alerte (E6), mise en œuvre par une unité d'alerte (6), consistant à alerter le pilote d'un risque d'actionnement erroné, en cas d'absence de cohérence entre la position détectée de la main du pilote et la position de l'élément d'actionnement (20).

2. Procédé selon la revendication 1,
**caractérisé en ce qu'**il comprend une seconde étape d'alerte (E8), mise en œuvre par l'unité d'alerte (6), consistant à informer le pilote dans le cas d'un actionnement erroné.

3. Procédé selon la revendication 2,
**caractérisé en ce qu'**il comprend une étape de récupération (E9), mise en œuvre par une unité de récupération (15), consistant à identifier, en cas d'actionnement erroné, au moins un élément d'actionnement permettant de remédier à la situation générée par l'actionnement erroné, l'élément d'actionnement identifié étant mis en évidence.

4. Procédé selon l'une quelconque des revendications 1 à 3, **caractérisé en ce qu'**il comprend une première étape de confirmation (E5) mise en œuvre par une unité de confirmation (3, 7), consistant à confirmer une intention d'actionnement considérée comme conforme, lorsque l'étape de vérification (E4B) conclut à une cohérence entre la position détectée de la main du pilote et la position de l'élément d'actionnement.

5. Procédé selon l'une quelconque des revendications 1 à 4, **caractérisé en ce qu'**il comprend une seconde étape de confirmation (E7), mise en œuvre par l'unité de confirmation (3, 7), consistant à confirmer un actionnement correct d'un élément d'actionnement identifié et mis en évidence.

6. Procédé selon l'une quelconque des revendications 1 à 5, **caractérisé en ce que** l'étape d'alerte (E6) consiste à mettre en œuvre au moins l'une des alertes suivantes : au moins une alerte visuelle et au moins une alerte sonore.

7. Procédé selon l'une quelconque des revendications 1 à 6, **caractérisé en ce qu'**il comprend les étapes suivantes, mises en œuvre avant l'étape d'identification (E2) :
- une étape de surveillance (E1A), mise en œuvre par une unité de surveillance (16), consistant à détecter, lors de la surveillance, le cas échéant, une condition particulière relative à la mise en œuvre d'une liste de commandes ; et
- une étape de vérification (E1B), mise en œuvre par une unité de vérification (18), consistant à vérifier, en cas de détection d'une condition particulière relative à la mise en œuvre d'une liste de commandes, si ladite liste de commandes correspond à au moins une liste de commandes prédéterminée, l'étape d'identification (E2) étant mise en œuvre uniquement lorsque la liste de commandes correspondant à une liste de commandes prédéterminée.

8. Système d'aide à la gestion d'au moins une liste de commandes, gérée par au moins un pilote d'un aéronef, comprenant
- une unité d'identification (2) configurée pour identifier au moins un élément d'actionnement (20) à actionner afin de mettre en œuvre une commande courante d'une liste de commandes ;
**caractérisé en ce que** le système comprend en outre
- une unité de signalisation (3) comportant une pluralité d'éléments de signalisation (S1, S2, 28, 29, 31, 32) et configurée pour mettre en évidence visuellement l'élément d'actionnement (20) identifié par une signalisation visuelle à proximité, sur ou autour dudit élément d'actionnement au moyen des éléments de signalisation ;
- une unité de détection (4) configurée pour détecter une position au moins d'une main d'un pilote ;
- une unité de vérification (5) configurée pour vérifier si la position détectée de la main du pilote est cohérente avec la position de l'élément d'actionnement (20) identifié et mis en évidence, en vue de son actionnement ; et
- une unité d'alerte (6) configurée pour alerter le pilote d'un risque d'actionnement erroné, en cas d'absence de cohérence entre la position détectée de la main du pilote et la position de l'élément d'actionnement.

9. Système selon la revendication 8,
**caractérisé en ce qu'**il comporte :
- une unité de surveillance (16) configurée pour détecter, lors de la surveillance, le cas échéant, une condition particulière relative à la mise en œuvre d'une liste de commandes ;
- une base de données (17) stockant une ou plusieurs listes de commandes prédéterminées ; et
- une unité de vérification (18) configurée pour vérifier, en cas de détection d'une condition particulière relative à la mise en œuvre d'une liste de commandes, si ladite liste de commandes correspond à l'une desdites listes de commandes stockées dans la base de données (17).

10. Système selon l'une des revendications 8 et 9,
**caractérisé en ce qu'**il comporte une unité de confirmation (3, 7) configurée pour confirmer une intention d'actionnement conforme ou un actionnement correct.

11. Système selon l'une quelconque des revendications 8 à 10, **caractérisé en ce qu'**il comporte une unité de récupération (15), configurée pour identifier, en cas d'actionnement erroné, au moins un élément d'actionnement permettant de remédier à la situation générée par l'actionnement erroné, l'élément d'actionnement identifié étant mis en évidence par l'unité de signalisation (3).

12. Système selon l'une quelconque des revendications 8 à 11, **caractérisé en ce que** l'unité de détection (4) comporte une pluralité de capteurs (21).

13. Aéronef,
**caractérisé en ce qu'**il comporte un système (1) d'aide à la gestion d'au moins une liste de commandes, tel que celui spécifié sous l'une quelconque des revendications 8 à 12.

## Patentansprüche

1. Verfahren zur Unterstützung bei der Abarbeitung mindestens einer Checkliste, die von mindestens einem Piloten eines Flugzeugs abgearbeitet wird, umfassend
- einen Identifizierungsschritt (E2), der von einer Identifizierungseinheit (2) ausgeführt wird und darin besteht, mindestens ein Betätigungselement (20) zu identifizieren, das zu betätigen ist, um eine aktuelle Anweisung einer Checkliste auszuführen;
**dadurch gekennzeichnet, dass** das Verfahren ferner umfasst
- einen Signalisierungsschritt (E3), der von einer Signalisierungseinheit (3) ausgeführt wird und darin besteht, das identifizierte Betätigungselement (20) durch eine optische Signalisierung bei dem, auf dem oder um das Betätigungselement optisch hervorzuheben;
- einen Detektionsschritt (E4A), der von einer Detektionseinheit (4) ausgeführt wird und darin besteht, mindestens eine Position einer Hand eines Piloten zu detektieren;
- einen Überprüfungsschritt (E4B), der von einer Überprüfungseinheit (5) ausgeführt wird und darin besteht zu überprüfen, ob die detektierte Position der Hand des Piloten mit der Position des identifizierten und hervorgehobenen Betätigungselements (20) im Hinblick auf dessen Betätigung übereinstimmt; und
- einen ersten Warnschritt (E6), der von einer Warneinheit (6) ausgeführt wird und darin besteht, den Piloten im Fall der Nichtübereinstimmung zwischen der detektierten Position der Hand des Piloten und der Position des Betätigungselements (20) vor der Gefahr einer Fehlbetätigung zu warnen.

2. Verfahren nach Anspruch 1, **dadurch gekennzeichnet, dass** es einen zweiten Warnschritt (E8) umfasst, der von der Warneinheit (6) ausgeführt wird und darin besteht, den Piloten im Fall einer Fehlbetätigung zu informieren.

3. Verfahren nach Anspruch 2, **dadurch gekennzeichnet, dass** es einen Wiederherstellungsschritt (E9) umfasst, der von einer Wiederherstellungseinheit (15) ausgeführt wird und darin besteht, im Fall einer Fehlbetätigung mindestens ein Betätigungselement zu identifizieren, das es ermöglicht, die durch die Fehlbetätigung bewirkte Situation zu bereinigen, wobei das identifizierte Betätigungselement hervorgehoben wird.

4. Verfahren nach einem der Ansprüche 1 bis 3, **dadurch gekennzeichnet, dass** es einen ersten Bestätigungsschritt (E5) umfasst, der von einer Bestätigungseinheit (3, 7) ausgeführt wird und darin besteht, eine als übereinstimmend betrachtete Betätigungsabsicht zu bestätigen, wenn der Überprüfungsschritt (E4B) auf eine Übereinstimmung zwischen der detektierten Position der Hand des Piloten und der Position des Betätigungselements schließt.

5. Verfahren nach einem der Ansprüche 1 bis 4, **dadurch gekennzeichnet, dass** es einen zweiten Bestätigungsschritt (E7) umfasst, der von der Bestätigungseinheit (3, 7) ausgeführt wird und darin besteht, eine richtige Betätigung eines identifizierten und hervorgehobenen Betätigungselements zu bestätigen.

6. Verfahren nach einem der Ansprüche 1 bis 5, **dadurch gekennzeichnet, dass** der Warnschritt (E6) darin besteht, mindestens eine der folgenden Warnungen auszuführen: mindestens eine optische Warnung und mindestens eine akustische Warnung.

7. Verfahren nach einem der Ansprüche 1 bis 6, **dadurch gekennzeichnet, dass** es die folgenden Schritte umfasst, die vor dem Identifizierungsschritt (E2) ausgeführt werden:
- einen Überwachungsschritt (E1A), der von einer Überwachungseinheit (16) ausgeführt wird und darin besteht, bei der Überwachung gegebenenfalls einen besonderen Umstand bezüglich der Ausführung einer Checkliste zu detektieren; und
- einen Überprüfungsschritt (E1B), der von einer Überprüfungseinheit (18) ausgeführt wird und darin besteht, im Fall der Detektion eines besonderen Umstands bezüglich der Ausführung einer Checkliste zu überprüfen, ob die Checkliste mindestens einer vorbestimmten Checkliste entspricht, wobei der Identifizierungsschritt (E2) nur ausgeführt wird, wenn die Checkliste einer vorbestimmten Checkliste entspricht.

8. System zur Unterstützung bei der Abarbeitung mindestens einer Checkliste, die von mindestens einem Piloten eines Flugzeugs abgearbeitet wird, umfassend
- eine Identifizierungseinheit (2), die dazu ausgestaltet ist, mindestens ein Betätigungselement (20) zu identifizieren, das zu betätigen ist, um eine aktuelle Anweisung einer Checkliste auszuführen; **dadurch gekennzeichnet, dass** das System ferner umfasst
- eine Signalisierungseinheit (3), die eine Mehrzahl von Signalisierungselementen (S1, S2, 28, 29, 31, 32) aufweist und dazu ausgestaltet ist, das identifizierte Betätigungselement (20) durch eine optische Signalisierung bei dem, auf dem oder um das Betätigungselement mittels der Signalisierungselemente optisch hervorzuheben;
- eine Detektionseinheit (4), die dazu ausgestaltet ist, mindestens eine Position einer Hand eines Piloten zu detektieren;
- eine Überprüfungseinheit (5), die dazu ausgestaltet ist zu überprüfen, ob die detektierte Position der Hand des Piloten mit der Position des identifizierten und hervorgehobenen Betätigungselements (20) im Hinblick auf dessen Betätigung übereinstimmt; und
- eine Warneinheit (6), die dazu ausgestaltet ist, den Piloten im Fall der Nichtübereinstimmung zwischen der detektierten Position der Hand des Piloten und der Position des Betätigungselements vor der Gefahr einer Fehlbetätigung zu warnen.

9. System nach Anspruch 8, **dadurch gekennzeichnet, dass** es aufweist:
- eine Überwachungseinheit (16), die dazu ausgestaltet ist, bei der Überwachung gegebenenfalls einen besonderen Umstand bezüglich der Ausführung einer Checkliste zu detektieren;
- eine Datenbank (17), die eine oder mehrere vorbestimmte Checklisten speichert; und
- eine Überprüfungseinheit (18), die dazu ausgestaltet ist, im Fall der Detektion eines besonderen Umstands bezüglich der Ausführung einer Checkliste zu überprüfen, ob die Checkliste einer der in der Datenbank (17) gespeicherten Checklisten entspricht.

10. System nach einem der Ansprüche 8 und 9, **dadurch gekennzeichnet, dass** es eine Bestätigungseinheit (3, 7) aufweist, die dazu ausgestaltet ist, eine übereinstimmende Betätigungsabsicht oder eine richtige Betätigung zu bestätigen.

11. System nach einem der Ansprüche 8 bis 10, **dadurch gekennzeichnet, dass** es eine Wiederherstellungseinheit (15) aufweist, die dazu ausgestaltet ist, im Fall einer Fehlbetätigung mindestens ein Betätigungselement zu identifizieren, das es ermöglicht, die durch die Fehlbetätigung bewirkte Situation zu bereinigen, wobei das identifizierte Betätigungselement von der Signalisierungseinheit (3) hervorgehoben wird.

12. System nach einem der Ansprüche 8 bis 11, **dadurch gekennzeichnet, dass** die Detektionseinheit (4) eine Mehrzahl von Sensoren (21) aufweist.

13. Flugzeug, **dadurch gekennzeichnet, dass** es ein System (1) zur Unterstützung bei der Abarbeitung mindestens einer Checkliste nach einem der Ansprüche 8 bis 12 aufweist.

## Claims

1. Method for assisting the management of at least one command list managed by at least one pilot of an aircraft, comprising
- an identification step (E2), implemented by an identification unit (2), consisting in identifying at least one actuation element (20) to be actuated in order to implement a current command from a command list;
**characterized in that** the method furthermore comprises
- a signalling step (E3), implemented by a signalling unit (3), consisting in visually highlighting the identified actuation element (20) through a visual signal close to, on or around said actuation element;
- a detection step (E4A), implemented by a detection unit (4), consisting in detecting a position of at least one hand of a pilot;
- a checking step (E4B), implemented by a checking unit (5), consisting in checking whether the detected position of the hand of the pilot matches the position of the identified and highlighted actuation element (20) for the purpose of actuating it; and
- a first warning step (E6), implemented by a warning unit (6), consisting in warning the pilot of a risk of incorrect actuation in the event of a lack of a match between the detected position of the hand of the pilot and the position of the actuation element (20) .

2. Method according to Claim 1, **characterized in that** it comprises a second warning step (E8), implemented by the warning unit (6), consisting in informing the pilot in the event of incorrect actuation.

3. Method according to Claim 2, **characterized in that** it comprises a recovery step (E9), implemented by a recovery unit (15), consisting in identifying, in the event of incorrect actuation, at least one actuation element for rectifying the situation generated by the incorrect actuation, the identified actuation element being highlighted.

4. Method according to any one of Claims 1 to 3, **characterized in that** it comprises a first confirmation step (E5), implemented by a confirmation unit (3, 7), consisting in confirming an actuation intention considered to be compliant when the checking step (E4B) concludes that there is a match between the detected position of the hand of the pilot and the position of the actuation element.

5. Method according to any one of Claims 1 to 4, **characterized in that** it comprises a second confirmation step (E7), implemented by the confirmation unit (3, 7), consisting in confirming correct actuation of an identified and highlighted actuation element.

6. Method according to any one of Claims 1 to 5, **characterized in that** the warning step (E6) consists in implementing at least one of the following warnings: at least one visual warning and at least one audio warning.

7. Method according to any one of Claims 1 to 6, **characterized in that** it comprises the following steps, implemented before the identification step (E2):
- a monitoring step (E1A), implemented by a monitoring unit (16), consisting in detecting, during the monitoring, where applicable, a particular condition relating to the implementation of a command list; and
- a checking step (E1B), implemented by a checking unit (18), consisting in checking, in the event of detection of a particular condition relating to the implementation of a command list, whether said command list corresponds to at least one predetermined command list, the identification step (E2) being implemented only when the command list corresponds to a predetermined command list.

8. System for assisting the management of at least one command list managed by at least one pilot of an aircraft, comprising
- an identification unit (2) configured so as to identify at least one actuation element (20) to be actuated in order to implement a current command from a command list;
**characterized in that** the system furthermore comprises
- a signalling unit (3) having a plurality of signalling elements (S1, S2, 28, 29, 31, 32) and configured so as to visually highlight the identified actuation element (20) through a visual signal close to, on or around said actuation element by way of the signalling elements;
- a detection unit (4) configured so as to detect a position of at least one hand of a pilot;
- a checking unit (5) configured so as to check whether the detected position of the hand of the pilot matches the position of the identified and highlighted actuation element (20) for the purpose of actuating it; and
- a warning unit (6) configured so as to warn the pilot of a risk of incorrect actuation in the event of a lack of a match between the detected position of the hand of the pilot and the position of the actuation element.

9. System according to Claim 8, **characterized in that** it has:
- a monitoring unit (16) configured so as to detect, during the monitoring, where applicable, a particular condition relating to the implementation of a command list;
- a database (17) storing one or more predetermined command lists; and
- a checking unit (18) configured so as to check, in the event of detection of a particular condition relating to the implementation of a command list, whether said command list corresponds to one of said command lists stored in the database (17).

10. System according to either of Claims 8 and 9, **characterized in that** it has a confirmation unit (3, 7) configured so as to confirm a compliant actuation intention or a correct actuation.

11. System according to any one of Claims 8 to 10, **characterized in that** it has a recovery unit (15) configured so as to identify, in the event of incorrect actuation, at least one actuation element for rectifying the situation generated by the incorrect actuation, the identified actuation element being highlighted by the signalling unit (3).

12. System according to any one of Claims 8 to 11, **characterized in that** the detection unit (4) has a plurality of sensors (21).

13. Aircraft, **characterized in that** it has a system (1) for assisting the management of at least one command list, such as the one specified in any one of Claims 8 to 12.
